(19) Europäisches Patentamt / European Patent Office / Office européen des brevets

(11) **EP 2 431 196 B1**

(12) **EUROPEAN PATENT SPECIFICATION**

(45) Date of publication and mention
of the grant of the patent:
**06.05.2015 Bulletin 2015/19**

(51) Int Cl.:
**B60C 9/22** *(2006.01)*     **B60C 9/00** *(2006.01)*

(21) Application number: **11181405.9**

(22) Date of filing: **15.09.2011**

(54) **A pneumatic tire and method for making a pneumatic tire**

Luftreifen und Verfahren zur Herstellung eines Luftreifens

Pneu et procédé de fabrication d'un pneu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2010 US 885737**

(43) Date of publication of application:
**21.03.2012 Bulletin 2012/12**

(73) Proprietor: **The Goodyear Tire & Rubber Company
Akron, OH 44316-0001 (US)**

(72) Inventors:
• **Imhoff, Serge Julien Auguste
9184 Schrondweiler (LU)**
• **Woods, John
63456 Hanau Klein-Auheim (DE)**

• **Olbrich, Ralph Joachim
63695 Glauburg (DE)**
• **Durand, Olivier Marcel Eugene
03410 Domerat (FR)**
• **Faure, Jean-Luc
03310 Villebret (FR)**
• **Tahon, Julia Martine Francoise Claudine
7595 Reckange (LU)**

(74) Representative: **Kutsch, Bernd
Goodyear SA
Patent Department
Avenue Gordon Smith
7750 Colmar-Berg (LU)**

(56) References cited:
**EP-A1- 1 304 404**    **US-A- 4 739 814**
**US-A- 6 096 156**    **US-A1- 2004 159 382**
**US-B1- 6 425 426**

**Description**

<u>Field of Invention</u>

This invention relates to a pneumatic tire and, in particular, to a high performance automobile or motorcycle tire, and to a method of manufacturing such a tire.

<u>Background of the Invention</u>

Conventional motorcycle tires utilize very wide treads which, in transverse cross-section, are sharply curved to provide good contact with the road surface when the motorcycle is steeply banked in cornering. Maintenance of a consistent ground contact area or 'tire footprint' under all conditions is a major factor in determining general vehicle handling. Of particular importance in race motorcycle tires of radial construction is a characteristic of high cornering power with stability to maximize cornering speeds under race conditions.

Conventional radial motorcycle race tires have short sidewalls which extend to the tread edges radially and axially outwardly from the tires beads. The beads provide engagement to the wheel rim on tapered bead seats. The sidewalls are reinforced by radial carcass plies which, when tensioned by the inflation pressure, act together with sidewall geometry to provide a fixed location for the curved tread regions to withstand cornering forces.

The sharply curved tread region of the conventional tire may be specially reinforced by a reinforcing breaker to give the required structural rigidity to allow for banking over of the motorcycle when cornering while also providing sufficient flexibility to allow localized tread flattening in the ground contact patch for good road grip.

A conventional motorcycle race tire may use a center hard tread compound and differing shoulder tread compounds since some race circuits necessitate uneven shoulder wear and grip.

Conventional processes for producing these tires involve an extrusion or calendering step which increase production cost and which may increase scrap. Any new and innovative manner of producing tires with reduced cost would be commercially desirable.

<u>Definitions</u>

The following definitions are controlling for the disclosed invention.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Cord" means one or more twisted or untwisted yarns such as an assembly of a plurality of twisted yarns. "Cords" may also be referred to as one of the reinforcement strands which the plies of a tire comprise.

"Denier" means the weight in grams per 9000 meters (unit for expressing linear density). Dtex means the weight in grams per 10,000 meters.

"Lateral" means an axial direction.

"Radial" and "radially" are used to mean directions radially toward or away from the axis of rotation of the tire.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

US-A- 2004/0159382 describes the formation of a belt structure for use in a pneumatic tire wherein one or more continuous parallel cords are wound up into coils disposed axially close to each other and laid down with a substantially zero angle relative to the equatorial plane of the tire. The cords may be applied directly on the carcass structure.

US-B1- 6,425,426 describes a pneumatic tire having a crown comprising a ply comprising substantially circumferentially oriented cords which are spirally wound.

US-A- 6,096,156 describes the use of a tackifier to a cord in the form of a plasma generated vinyl compound deposition before RFL dipping or in the form of an adhesive tackifier after RFL dipping.

EP-A- 1 304 404 describes the use of cords in hoses or pipes wherein the cords are dipped in a RFL step followed by a coating with a tackifier.

<u>Summary of Invention</u>

The invention relates to a pneumatic tire in accordance with claim 1 and to a method in accordance with claim 7.

Dependent claims refer to preferred embodiments of the invention.

A pneumatic tire in accordance with the present invention includes preferably a tire component having a plurality of individually dipped and individually tackified cords applied individually to the tire component. The tire component may be, for example, a tread reinforcement structure for improving high-speed performance and manufacturing of the pneumatic tire.

According to one aspect of the present invention, the cords may be monofilaments or twisted yarns.

In one aspect of the invention, the cords are aramid cords with a Dtex in a range of from 1500 to 1800 Dtex such as 1670 Dtex or 1680 Dtex.

In one aspect of the invention, the cords may have a twist multiplier in a range of from 4 to 7, preferably 5 and 6. The "twist multiplier" refers to a number that is an indicator of the helix angle that the one or more yarns in a cord make with respect to a longitudinal axis of a cord. As used herein, the twist multiplier (TM) of a cord is determined according to the following equation which is well known in the textile art:

$$TM = 0.0137 \ CTx(CD)^{1/2}$$

wherein TM is the twist multiplier; CT is the number of turns per inch (2.54 cm) of cord length; and CD is the sum of the deniers of the yarn(s), and/or sub-groups of the yarns of the cord before any twist is imparted to the yarn subgroups. The twist multiplier of a cord characterizes its physical properties, like tensile, modulus, elongation and fatigue.

According to still another aspect of the present invention, the tread reinforcement structure may include a plurality of individually dipped and individually tackified cords oriented from -5° to +5° relative to a circumferential direction of the pneumatic tire.

According to yet another aspect of the present invention, the cords may each be constructed of one, two, three or more twisted aramid yarns.

According to still another aspect of the present invention, the tire component is selected from the group consisting of a belt structure, a carcass, an overlay, an undertread, and an apex.

According to yet another aspect of the present invention, a tackified finish may be applied to the cords during or after the dipping process.

According to still another aspect of the present invention, the tire component is an overlay disposed radially between a tread, at least one breaker and/or at least one carcass ply.

According to yet another aspect of the present invention, the tackified cords may be applied directly on to a carcass structure during a building process of an uncured pneumatic tire.

According to still another aspect of the present invention, the cords are constructed of aramid.

The pneumatic tire preferably is a motorcycle tire such as a motorcycle race tire.

A method in accordance with the present invention constructs a pneumatic tire. The method preferably comprises the steps of: first, treating or pretreating an individual cord by dipping the cord in a first solution or emulsion; second, drying the individual cord; third, tackifying a surface of the dipped and dried individual cord with a second solution or emulsion; and fourth, applying the tackified individual cord on a surface of an uncured tire component.

According to another aspect of the present invention, the tackified individual cord may be applied to the uncured tire component on a tire building drum.

According to still another aspect of the present invention, the uncured tire component is selected from a group consisting of: a carcass, a belt structure, an overlay, an undertread or a tread cushion layer.

The second solution or emulsion comprises a rubber compound dissolved in a solvent. Preferably, the solvent comprises a petroleum derivative such as toluene.

According to still another aspect of the present invention, the applying step occurs without calendering of the individual cord.

According to still another aspect of the present invention, the dipping may include dipping the individual cord in the first solution or emulsion, and applying an adhesion promoter and/or dipping the dipped individual cord in a further solution or emulsion prior to the drying step.

According to still another aspect of the present invention, the further solution or emulsion is an aqueous emulsion comprising a rubber latex containing resorcinol formaldehyde (RFL) resin.

Brief Description of the Drawings

Further aspects of the present invention will become apparent from the description of the following embodiments in conjunction with the attached diagrammatic drawing in which:

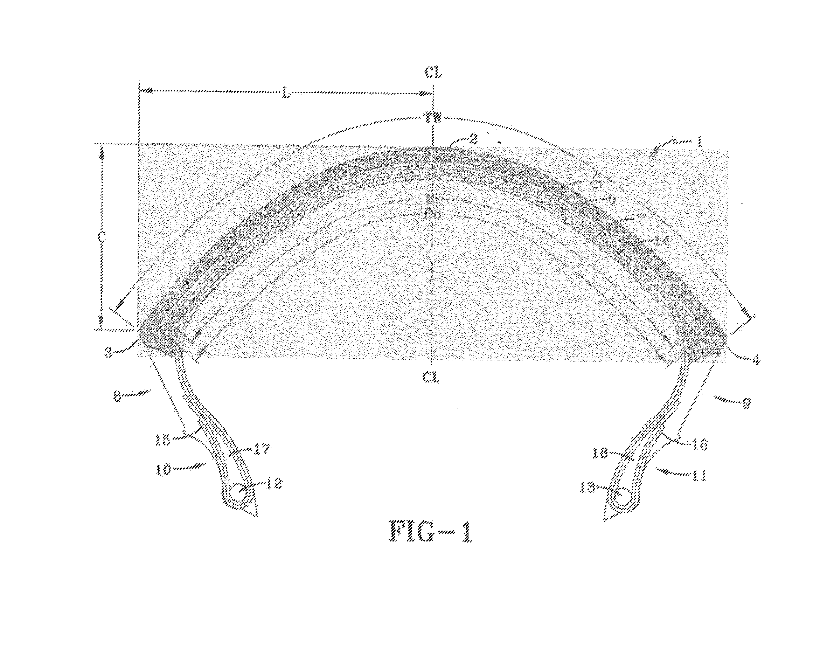

FIG. 1 is a schematic representation of an example motorcycle tire for use with the present invention.

Description of an Example Embodiment

The example motorcycle tire 1 of FIG. 1 includes a pair of sidewalls 8, 9 terminating in bead regions 10, 11. Each bead region 10, 11 is reinforced by an inextensible annular bead core 12, 13. Extending between each bead region 10, 11 is a tire carcass reinforcement ply structure 14 of one or more plies which is/are anchored in each bead region by being turned around each respective bead core 12, 13 laterally from inside to outside to form each ply turn-up 15, 16. The carcass reinforcement ply structure 14 may, for example, comprise a single ply of nylon fabric cords oriented substantially in a radial direction. Each bead region 10, 11 may further comprise a hard rubber apex member 17, 18 anchored to each respective bead core 12, 13 and narrowing/tapering radially outward.

The carcass ply fabric of the example tire 1 may also comprise polyester, rayon, nylon, or para-aramid cords. Further, while a single ply carcass of cords at substantially 90 degrees may be particularly advantageous in the case of tires for the rear wheel of a motorcycle, for the front wheel, a motorcycle tire with two plies of cords crossed at an angle of 70-88 degrees may be utilized.

The example tire 1 may have a camber value of 0.6 and a convex tread region 2, having tread edges 3, 4 reinforced by a breaker assembly (or belt structure) and an overlay 8 in accordance with the present invention. The width TW of the tread may be 220 mm measured along the outer surface. The breaker assembly may comprise zero, one, or two breaker plies 5, 7. As an example, the breaker ply or plies 5, 7 may comprise para-aramid cord tire fabric or other suitable material and construction, such as a steel monofilament ply.

In the example tire 1 of FIG. 1, the cords in the two breaker plies 5, 7 may be oppositely inclined to each other at an angle of 25 degrees to the circumferential direction of the tire. The radially inner breaker ply 7 may have a width $B_i$ of 200 mm and may be narrower than the radially outer breaker ply 5, which may have a width $B_o$ of 220 mm. The breaker plies 5, 7 may also comprise steel cords.

The overlay 6 may comprise single end cords, which are individually dipped and subsequently individually tackified (i.e., not calendered). While the cords may be individually dipped, several cords may also be dipped concurrently, moving through a dip process/machine in parallel. For example, the individual cords may be monofilaments, para-aramid 1680/3 Dtex with 240/240 tpm (turns per meter) or other suitable configurations. The selection of materials for the tackified finish may depend greatly upon the materials selected for use in the tire. One of ordinary skill may determine such suitable materials. Tackified finishes may be achieved by various methods such as coating the single end cords in an aqueous or solvent blend of resin and rubber lattices.

An example method in accordance with the present invention may comprise the steps of: first, pretreating an individual cord by dipping the cord in a first solution or emulsion; second, drying the individual cord; third, tackifying a surface of the dipped and dried individual cord with a second solution or emulsion; and fourth, applying the tackified individual cord on a surface of an uncured tire component.

The second solution or emulsion comprises a conventional un-vulcanized rubber compound dissolved in a solvent. Preferably, the solvent comprises a petroleum derivative or distillate such as toluene.

The dipping may include a treatment of the individual cord with an adhesion promoter as part of the dipping process. Typical examples of adhesion promoters include resorcinol formaldehyde latex (RFL), isocyanate based material, epoxy based material, and materials based on melamine formaldehyde resin. To this end, the dipping may include dipping the individual cord in the first solution or emulsion (or in a first bath) and subsequently dipping the dipped individual cord in a further solution or emulsion (or a second bath) prior to the drying step.

Preferably, the further solution or emulsion is an aqueous emulsion (dispersion) comprising a rubber latex containing resorcinol formaldehyde (RFL) resin. The RFL resin may be a primary element of adhesion between the cord and the rubber with the latex also reducing the modulus of the RFL resin.

The tackifying of the surface of the dipped and dried individual cord includes applying a tackified finish for facilitating adhesion, or green tack, during the building process of the green tire. The selection of materials for such tackified finish will depend greatly upon the materials selected for use in the tire, and the skilled person on the basis of his common knowledge can easily determine them appropriately. Tackified finishes can be achieved by various methods such as coating the cord in an aqueous blend of rosin and rubber lattices, or with a solvent solution or emulsion of an un-vulcanized rubber compound.

The cords of the overlay 6 may be oriented in the range of -5° to +5° relative to the circumferential direction of the tire 1. During building of the uncured tire, the cords may be individually placed directly upon an outermost of one or two carcass plies 14 (if no breakers are applied) or the outermost of one or two breakers (breaker 5 in FIG. 1), without any intermediate manufacturing process.

The overlay 6 in accordance with the present invention and the breakers 5, 7 thus provides a tread crown reinforcement structure and may optimize high speed performance for a motorcycle tire, as well as provide excellent handling characteristics, while reducing overall manufacturing efficiency and cost. The present invention accomplishes this by utilizing the individually dipped and individually tackified Single End Dipped (SED) aramid cord(s). Additionally, the cords for the overlay 8 may be calendered in small strips of 2 or 3 cords.

In accordance with the present invention, the cords may be first dipped in a first "classical" solution and, in a second phase, tackified by a second solution or emulsion (as described above). Once the cord is tackified, the cord will have enough cohesive properties to adhere to an unvulcanized component, such as the overlay 6, carcass 14, breaker 5, 7, tread base, undertread, apex 17, 18, etc.). This provides an improvement over conventional tire building methods, which include an additional calendering step and often generate a higher amount of scrap. Further, cord properties are not affected by calendering and storage. Also, the process provides a simpler and more efficient method, since no weft yarns are needed for weaving and calendering.

In accordance with the present invention, this "ready to use" SED cord overlay 6 may provide a "jointless" belt having a better controlled tension applied to the cord during winding at a tire building machine. This may be critical for strips with multiple cords due to the curvature of a radial motorcycle carcass. The cord at the tread edge may have significantly shorter length compared to the cord at the center of the tread.

As stated above, an overlay 6 or other tire component of SED cords in accordance with the present invention produces excellent handling performance in a tire 1, as well as reducing manufacturing cost. Further, a method in accordance with the present invention provides enhanced efficiency and reduced cost for constructing a pneumatic tire. Thus, the SED cords and method both enhances the performance and/or manufacturing of a pneumatic tire, even though the complexities of the structure and behavior of the pneumatic tire are such that no complete and satisfactory theory has been propounded. Temple, Mechanics of Pneumatic Tires (2005). While the fundamentals of classical composite theory are easily seen in pneumatic tire mechanics, the additional complexity introduced by the many structural components of pneumatic tires readily complicates the problem of predicting tire performance. Mayni, Composite Effects on Tire Mechanics (2005). Additionally, because of the non-linear time, frequency, and temperature behaviors of polymers and rubber, analytical design of pneumatic tires is one of the most challenging and underappreciated engineering challenges in today's industry.

A pneumatic tire has certain essential structural elements. United States Department of Transportation, Mechanics of Pneumatic Tires, pages 207-208 (1981). An important structural element is the overlay, typically made up of many flexible, high modulus cords of natural textile, synthetic polymer, glass fiber, or fine hard drawn steel or other metal embedded in, and bonded to, a matrix of low modulus polymeric material, usually natural or synthetic rubber. Id. at 207 through 208.

The flexible, high modulus cords are usually disposed as a single layer. Id. at 208. Tire manufacturers throughout the industry cannot agree or predict the effect of different twists of overlay cords on noise characteristics, handling, durability, comfort, etc. in pneumatic tires, Mechanics of Pneumatic Tires, pages 80 through 85.

These complexities are demonstrated by the below table of the interrelationships between tire performance and tire components.

| | LINER | CARCASSPLY | APEX | BELT | OV'LY | TREAD | MOLD |
|---|---|---|---|---|---|---|---|
| | | | | | | | |
| TREADWEAR | | | | X | | X | X |
| NOISE | | X | X | X | X | X | X |
| HANDLING | | X | X | X | X | X | X |
| TRACTION | | | | | | X | X |
| DURABILITY | X | X | X | X | X | X | X |
| ROLL RESIST | X | | X | X | | X | X |
| RIDE COMFORT | X | X | X | | | X | |
| HIGH SPEED | | X | X | X | X | X | X |
| AIR RETENTION | X | | | | | | |
| MASS | X | X | X | X | X | X | X |

As seen in the table, overlay cord characteristics affect the other components of a pneumatic tire (i.e., overlay affects apex, carcass ply, belt, tread, etc.), leading to a number of components interrelating and interacting in such a way as to affect a group of functional properties (noise, handling, durability, comfort, high speed, and mass), resulting in a completely unpredictable and complex composite. Thus, changing even one component can lead to directly improving or degrading as many as the above ten functional characteristics, as well as altering the interaction between that one component and as many as six other structural components. Each of those six interactions may thereby indirectly improve or degrade those ten functional characteristics. Whether each of these functional characteristics is improved, degraded, or unaffected, and by what amount, certainly would have been unpredictable without the experimentation and testing conducted by the inventors.

Thus, for example, when the structure (i.e., twist, cord construction, etc.) of the overlay of a pneumatic tire is modified with the intent to improve one functional property of the pneumatic tire, any number of other functional properties may be unacceptably degraded. Furthermore, the interaction between the overlay and the apex, carcass ply, belt (or breaker), and tread may also unacceptably affect the functional properties of the pneumatic tire. A modification of the overlay may not even improve that one functional property because of these complex interrelationships.

Thus, as stated above, the complexity of the interrelationships of the multiple components makes the actual result of modification of an overlay 6, in accordance with the present invention, impossible to predict or foresee from the infinite possible results. Only through extensive experimentation have the overlay 6 and cords of the present invention been revealed as an excellent, unexpected, and unpredictable option for a pneumatic tire.

**Claims**

1. A pneumatic tire comprising a tire component having a plurality of cords applied individually to the tire component, **characterised in that** the plurality of cards applied individually to the tire component are individually dipped and tackified aramid cards, wherein the tackified cords are tackified by a solution or emulsion comprising a rubber compound dissolved in a solvent, and wherein the aramid cords have a Dtex in a range of from 1500 to 1800 Dtex.

2. The pneumatic tire as set forth in claim 1 wherein the individually dipped and tackified cords are oriented from -5° to +5° relative to a circumferential direction of the pneumatic tire.

3. The pneumatic tire as set forth in at least one of the previous claims wherein the cords are constructed of two or three twisted aramid yarns.

4. The pneumatic tire as set forth in at least one of the previous claims wherein the tire component is selected from the group consisting of a belt structure (5,7), a carcass or a carcass structure (14), an overlay (6), an undertread, a tread cushion layer, a tread reinforcement structure, or an overlay disposed radially between the tread and a breaker or between the tread and at least one carcass ply.

5. The pneumatic tire as set forth in at least one of the previous claims wherein the cords are applied directly on to the tire component during a building process of an uncured pneumatic tire.

6. A method of manufacturing a pneumatic tire, the method comprising the steps of:

   treating an individual aramid cord having a Dtex in a range of from 1500 to 1800 Dtex by dipping the individual cord in a first solution or emulsion;
   drying the dipped individual cord;
   - tackifying a surface of the dipped and dried individual cord with a second solution or emulsion; and
   applying the tackified individual cord on a surface of an uncured tire component;
   wherein the second solution or emulsion comprises a rubber compound dissolved in a solvent.

7. The method as set forth in claim 6 wherein the tackified individual cord is applied to the uncured tire component on a tire building drum or wherein the cords are applied directly onto the tire component during a building process of an uncured pneumatic tire.

8. The method as set forth in claim 6 or 7 wherein the uncured tire component is selected from a group consisting of a belt structure, a carcass or a carcass structure, an overlay, an undertread, a tread cushion layer, a tread reinforcement structure, or an overlay disposed radially between the tread and a breaker or between the tread and at least one carcass ply.

9. The method as set forth in claim 6 wherein the applying step occurs without calendering of the individual cord.

10. The method as set forth in claim 6 wherein the dipping includes dipping the individual cord in the first solution or emulsion and dipping the dipped individual cord in a further solution or emulsion.

**11.** The method of claim 10 wherein the further solution or emulsion is an aqueous emulsion comprising a rubber latex containing resorcinol formaldehyde (RFL) resin.

**Patentansprüche**

**1.** Luftreifen, umfassend ein Reifenbauteil mit einer Vielzahl von individuell an dem Reifenbauteil angebrachten Korden, **dadurch gekennzeichnet, dass** die Vielzahl von individuell an dem Reifenbauteil angebrachten Korden individuell getauchte und klebrig gemachte Aramidkorde sind, wobei die klebrig gemachten Korde durch eine Lösung oder Emulsion klebrig gemacht sind, die eine in einem Lösungsmittel aufgelöste Kautschukmischung umfasst, und wobei die Aramidkorde ein dtex im Bereich von 1500 bis 1800 dtex aufweisen.

**2.** Luftreifen, wie in Anspruch 1 dargelegt, wobei die individuell getauchten und klebrig gemachten Korde von -5°bis +5°bezügli ch einer Umfangsrichtung des Luftreifens ausgerichtet sind.

**3.** Luftreifen, wie in mindestens einem der vorgenannten Ansprüche dargelegt, wobei die Korde aus zwei oder drei verdrillten Aramidgarnen aufgebaut sind.

**4.** Luftreifen, wie in mindestens einem der vorgenannten Ansprüche dargelegt, wobei der Reifenbauteil aus der Gruppe ausgewählt ist, bestehend aus einer Gürtelstruktur (5, 7), einer Karkasse oder einer Karkassenstruktur (14), einer Gürteldecklage (6), einem Protektorunterteil, einer Unterplattenlage, einer Laufflächenverstärkungsstruktur, oder einer radial zwischen der Lauffläche und einer Zwischenbaulage oder zwischen der Lauffläche und mindestens einer Karkassenlage angeordneten Gürteldecklage.

**5.** Luftreifen, wie in mindestens einem der vorgenannten Ansprüche dargelegt, wobei die Korde während eines Aufbauvorgangs eines unvulkanisierten Luftreifens direkt an dem Reifenbauteil angebracht werden.

**6.** Verfahren zur Herstellung eines Luftreifens, wobei das Verfahren die Schritte umfasst des:

Behandelns eines individuellen Aramidkords mit einem dtex im Bereich von 1500 bis 1800 dtex durch Tauchen des individuellen Kords in eine erste Lösung oder Emulsion;
Trocknens des getauchten individuellen Kords;
Klebrigmachens einer Oberfläche des getauchten und getrockneten individuellen Kords mit einer zweiten Lösung oder Emulsion; und
Anbringens des klebrig gemachten individuellen Kords an einer Oberfläche eines unvulkanisierten Reifenbauteils;
wobei die zweite Lösung oder Emulsion eine in einem Lösungsmittel aufgelöste Kautschukmischung umfasst.

**7.** Luftreifen, wie in Anspruch 6 dargelegt, wobei der klebrig gemachte individuelle Kord an dem unvulkanisierten Reifenbauteil auf einer Reifenbautrommel angebracht wird oder wobei die Korde während eines Aufbauvorgangs eines unvulkanisierten Luftreifens direkt an dem Reifenbauteil angebracht werden.

**8.** Verfahren, wie in Anspruch 6 oder 7 dargelegt, wobei das unvulkanisierte Reifenbauteil aus einer Gruppe ausgewählt ist, bestehend aus einer Gürtelstruktur, einer Karkasse oder einer Karkassenstruktur, einer Gürteldecklage, einem Protektorunterteil, einer Unterplattenlage, einer Laufflächenverstärkungsstruktur, oder einer radial zwischen der Lauffläche und einer Zwischenbaulage oder zwischen der Lauffläche und mindestens einer Karkassenlage angeordneten Gürteldecklage.

**9.** Verfahren, wie in Anspruch 6 dargelegt, wobei der Anbringungsschritt ohne Kalandrieren des individuellen Kords stattfindet.

**10.** Verfahren, wie in Anspruch 6 dargelegt, wobei das Tauchen das Tauchen des individuellen Kords in die erste Lösung oder Emulsion und Tauchen des getauchten individuellen Kords in eine weitere Lösung oder Emulsion beinhaltet.

**11.** Verfahren nach Anspruch 10, wobei die weitere Lösung oder Emulsion eine wässrige Emulsion ist, die einen Kautschuklatex umfasst, der Resorcinolformaldehyd-Harz (RFL-Harz) enthält.

**Revendications**

1. Bandage pneumatique comprenant un composant de bandage pneumatique possédant plusieurs câblés que l'on applique de manière individuelle sur le composant de bandage pneumatique, **caractérisé en ce que** lesdits plusieurs câblés que l'on applique de manière individuelle sur le composant de bandage pneumatique sont des câblés d'aramide trempés et rendus collants de manière individuelle, dans lequel les câblés rendus collants sont rendus collants via une solution ou une émulsion comprenant un composé de caoutchouc dissous dans un solvant, et dans lequel les câblés d'aramide possèdent une valeur dtex dans la plage de 1500 à 1800 dtex.

2. Bandage pneumatique selon la revendication 1, dans lequel les câblés trempés et rendus collants de manière individuelle présentent une orientation de -5° à +5° par rapport à la direction circonférentielle du bandage pneumatique.

3. Bandage pneumatique selon au moins une des revendications précédentes, dans lequel les câblés sont constitués par deux ou trois fils d'aramide torsadés.

4. Bandage pneumatique selon au moins une des revendications précédentes, dans lequel le composant de bandage pneumatique est choisi parmi le groupe constitué par une structure de ceintures (5, 7), une carcasse ou une structure de carcasses (14), une couche de recouvrement (6), une sous-chape, une couche de rembourrage de bande de roulement, une structure de renforcement de bande de roulement ou une couche de recouvrement disposée en direction radiale entre la bande de roulement et une nappe de sommet ou bien entre la bande de roulement et au moins une nappe de carcasse.

5. Bandage pneumatique selon au moins une des revendications précédentes, dans lequel les câblés sont appliqués directement sur le composant de bandage pneumatique au cours du processus de confection d'un bandage pneumatique non vulcanisé.

6. Procédé de confection d'un bandage pneumatique, le procédé comprenant les étapes consistant à :

   traiter un câblé d'aramide individuel possédant une valeur dtex dans la plage de 1500 à 1800 dtex en plongeant le câblé individuel dans une première solution ou émulsion ;
   sécher le câblé individuel trempé ;
   rendre collante une surface du câblé individuel trempé et séché, avec une deuxième solution ou émulsion ; et
   appliquer le câblé individuel rendu collant sur une surface d'un composant de bandage pneumatique non vulcanisé ;
   dans lequel la deuxième solution ou émulsion comprend un composé de caoutchouc dissous dans un solvant.

7. Procédé selon la revendication 6, dans lequel le câblé individuel rendu collant est appliqué sur le composant de bandage pneumatique non vulcanisé sur un tambour de confection de bandage pneumatique ou dans lequel les câblés sont appliqués directement sur le composant de bandage pneumatique au cours d'un procédé de confection d'un bandage pneumatique non vulcanisé.

8. Procédé selon la revendication 6 ou 7, dans lequel le composant de bandage pneumatique non vulcanisé est choisi parmi le groupe constitué par une structure de ceintures, une carcasse ou une structure de carcasses, une couche de recouvrement, une sous-chape, une couche de rembourrage de bande de roulement, une structure de renforcement de bande de roulement ou une couche de recouvrement disposée en direction radiale entre la bande de roulement et une nappe de sommet ou bien entre la bande de roulement et au moins une nappe de carcasse.

9. Procédé selon la revendication 6, dans lequel l'étape d'application a lieu en l'absence de calandrage du câblé individuel.

10. Procédé selon la revendication 6, dans lequel le trempage englobe le trempage du câblé individuel dans la première solution ou émulsion et le trempage du câblé individuel trempé dans une solution ou une émulsion supplémentaire.

11. Procédé selon la revendication 10, dans lequel la solution ou l'émulsion supplémentaire est une émulsion aqueuse comprenant un latex de caoutchouc contenant une résine de résorcinol formaldéhyde (RFL).

FIG-1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040159382 A
- US 6425426 B1
- US 6096156 A
- EP 1304404 A

**Non-patent literature cited in the description**

- **MAYNI.** *Composite Effects on Tire Mechanics,* 2005
- *Mechanics of Pneumatic Tires,* 1981, 207-208